# EUROPEAN PATENT SPECIFICATION

(11) **EP 4 375 645 B1**
(45) Date of publication and mention of the grant of the patent: **14.10.2026**
(21) Application number: 23163571.5
(22) Date of filing: 22.03.2023
(51) Int. Cl.: G01N 21/64, B01L 3/00, G01N 15/14

(54) **BIOSENSOR AND CELL MANIPULATION METHOD**
BIOSENSOR UND ZELLMANIPULATIONSVERFAHREN
BIOCAPTEUR ET PROCÉDÉ DE MANIPULATION DE CELLULES

(30) Priority: 22.11.2022 US 202217992126
(43) Date of publication of application: 29.05.2024
(73) Proprietor: VisEra Technologies Company Limited, Hsin-Chu City 30078 (TW)
(72) Inventor: HSIEH, Hsin-Yi, Hsin-Chu City (TW)
(74) Representative: Ter Meer und Partner mbB

(56) References cited:
- US-A1- 2009 170 186
- US-A1- 2022 113 469
- HONGWEN REN AND SHIN-TSON WU: "Optical switch using a deformable liquid droplet", OPTICS LETTERS, OPTICAL SOCIETY OF AMERICA, US, vol. 35, no. 22, 15 November 2010 (2010-11-15), pages 3826 - 3828, XP001559120, ISSN: 0146-9592, DOI: 10.1364/OL.35.003826
- REN HONGWEN ET AL: "Deformable liquid droplets for optical beam control", OPTICS EXPRESS, 24 May 2010 (2010-05-24), pages 11904 - 11910, XP093077084, Retrieved from the Internet <URL:https://opg.optica.org/directpdfaccess/c174f2b4-e00b-4d1b-8400d727be377189_199653/oe-18-11-11904.pdf?da=1&id=199653&seq=0&mobile=no> [retrieved on 20230829]

## Description

### BACKGROUND

### Technical Field

The present disclosure relates to a biosensor and a cell manipulation method, and in particular, it relates to a biosensor having electro-wetting chambers.

### Description of the Related Art

Recently, integrated sensing devices have been used for biological analysis. For this application, a biometric object or bio-sample is placed on a biosensor, and the light that reflect off (or is emitted by) the biometric object or bio-sample is directed to the photodiode of the biosensor. Therefore, the profile of the biometric object (or the biological properties of the bio-sample) may be identified for further analysis.

One of the leading-edge applications of biosensors is in optofluidic manipulation. Optofluidic manipulation is a new generation of technologies based on forces exerted by a light beam, enabling interactive biology at the cellular level and thus leading to a new fresh turning point in drug discovery, such as single cell incubation and screening for manufacturing monoclonal antibodies in immune cancer therapy.

US 2022/113469 A1 discloses an integrated device and related instruments and systems for analyzing samples in parallel. The integrated device may include sample wells arranged on a surface of where individual sample wells are configured to receive a sample labeled with at least one fluorescent marker configured to emit emission light in response to excitation light. The integrated device may further include photodetectors positioned in a layer of the integrated device, where one or more photodetectors are positioned to receive a photon of emission light emitted from a sample well. The integrated device further includes one or more photonic structures positioned between the sample wells and the photodetectors, where the one or more photonic structures are configured to attenuate the excitation light relative to the emission light such that a signal generated by the one or more photodetectors indicates detection of photons of emission light.

US 2009/170186 A1 discloses an optical image-driven light induced dielectrophoresis (DEP) apparatus and method which provide for the manipulation of particles or cells with a diameter on the order of 100 µm or less. The apparatus is referred to as optoelectric tweezers (OET) and provides a number of advantages over conventional optical tweezers, in particular the ability to perform operations in parallel and over a large area without damage to living cells. The OET device generally comprises a planar liquid-filled structure having one or more portions which are photoconductive to convert incoming light to a change in the electric field pattern. The light patterns are dynamically generated to provide a number of manipulation structures that can manipulate single particles and cells or groups of particles/cells. The OET preferably includes a microscopic imaging means to provide feedback for the optical manipulation, such as detecting position and characteristics wherein the light patterns are modulated accordingly.

HONGWEN REN AND SHIN-TSON WU: "Optical switch using a deformable liquid droplet" (OPTICS LETTERS, vol. 35, no. 22, 15 November 2010, pages 3826-3828) discloses an optical switch based on a deformable liquid droplet. The device consists of a clear liquid droplet surrounded by a black liquid. In the voltage-off state, the incident light is absorbed by the black liquid. As the voltage increases, the dielectric force reshapes the droplet by uplifting its dome. As the dome touches the top substrate, a clear channel is opened, allowing the incident light to pass through. Once the voltage is removed, the deformed droplet size relaxes back to its original shape and the channel is closed.

Ren Hongwen ET AL: "Deformable liquid droplets for optical beam control", (Optics Express, 24 May 2010, pages 11904-11910) discloses a liquid droplet whose surface profile can be reshaped by voltage. As the dielectric force increases, the dome of a liquid droplet could touch the top substrate and become flat. While the voltage is removed, the droplet recovers to its original spherical shape.

Although existing biosensors have been adequate for their intended purposes, they have not been entirely satisfactory in all respects.

Thus, it is an object to provide a novel biosensor for cell incubation and manipulation in a much more convenient manner.

It is a further object to produce a biosensor that can precisely identify various biological features and bio-reactions.

### BRIEF SUMMARY OF THE DISCLOSURE

The object is solved by the invention as set out by the features of the independent claim. Preferred embodiments are given in the dependent claims.

In accordance with the invention, a biosensor is provided. The biosensor includes a plurality of sensor units. Each sensor units includes a plurality of photodiodes, a plurality of first electrodes, an electro-wetting chamber, a second electrode, a bottom conductive layer, a photoconductive layer, an open cell chamber, and a top conductive layer. The first electrodes are disposed above the photodiodes. The electro-wetting chamber is disposed above the first electrodes. A non-polar liquid is disposed in the electro-wetting chamber. The second electrode is disposed on the electro-wetting chamber. The bottom conductive layer is disposed above the second electrode. The photoconductive layer is disposed on the bottom conductive layer. The open cell chamber is disposed on the photoconductive layer and configured to receive a cell. The top conductive layer is disposed on the open cell chamber.

In one or more embodiments, the photoconductive layer may comprise amorphous silicon.

In one or more embodiments, each of the sensor units may further comprise a stack of dielectric layers disposed between the first electrodes and the electro-wetting chamber.

In one or more embodiments, the stack of dielectric layers may comprise an interference filter.

In one or more embodiments, the stack of dielectric layers may be in direct contact with the first electrodes

Each of the sensor units further comprises a waveguide layer disposed between the first electrodes and the electro-wetting chamber.

A top surface of the waveguide layer is exposed in the electro-wetting chamber.

A refractive index of the waveguide layer is greater than a refractive index of the non-polar liquid.

In one or more embodiments, the electro-wetting chamber may comprise a plurality of electro-wetting cells separated from one another by isolation structures.

In one or more embodiments, the non-polar liquid may be disposed in each of the electro-wetting cells.

In one or more embodiments, the electro-wetting cells may be disposed above the first electrodes in one-to-one correspondence.

In one or more embodiments, a polar liquid may be further disposed in the electro-wetting chamber.

In one or more embodiments, a refractive index of the polar liquid may be lower than a refractive index of the non-polar liquid.

In one or more embodiments, the electro-wetting chamber may comprise an isolation structure between the first electrodes and the second electrode and surrounding the non-polar liquid.

The first electrodes, the second electrode, and the bottom conductive layer are transparent, and the top conductive layer may be transparent.

In one or more embodiments, the biosensor may further comprise a microfluidic channel connecting with the open cell chamber.

In one or more embodiments, each of the sensor units may further comprise a color filter between the photodiodes and the first electrodes.

In one or more embodiments, the color filter may be disposed above the photodiodes in one-to-one correspondence.

In accordance with some embodiments of the disclosure, a cell manipulation method is provided. The cell manipulation method includes providing the aforementioned biosensor, introducing cells into the biosensor, applying a voltage to the bottom conductive layer and the top conductive layer, and applying a voltage to one or more of the first electrodes and the second electrode to form a first electric field in the electro-wetting chamber. The non-polar liquid is deformed by the first electric field. The first optical path is formed in the non-polar liquid. The cell manipulation method further includes forming a first optical pattern surrounding one of the cells using a first laser beam that passes through the first optical path, leaving the cell surrounded by the first optical pattern in the open cell chamber, and removing the remaining cells from the biosensor.

In one or more embodiments, the cell manipulation method may further comprise incubating the cell left in the open cell chamber to generate multiple cells derived from the cell; forming a second optical pattern surrounding the cells derived from the cell using the first laser beam; and harvesting the cells derived from the cell and surrounded by the second optical pattern from the open cell chamber.

In one or more embodiments, the first optical pattern and the second optical pattern may respectively have a first projected area and a second projected area on a horizontal plane on which a bottom of the open cell chamber is located.

In one or more embodiments, the second projected area may be greater than the first projected area.

In one or more embodiments, the cell manipulation method may further comprise incubating the cell left in the open cell chamber to generate multiple cells derived from the cell; labeling the cells with a fluorescent tag; applying a voltage to the first electrodes and the second electrode to form a second electric field whose area is larger than the first electric field, wherein the non-polar liquid is deformed by the second electric field, and a third optical path is formed in the non-polar liquid; irradiating the cells having the fluorescent tag with a second laser beam that passes through the third optical path to excite the fluorescent tag; and obtaining a fluorescent signal emitted by the fluorescent tag after being excited.

In one or more embodiments, the first laser beam may have a first wavelength, and the second laser beam may have a second wavelength that is shorter than the first wavelength.

A detailed description is given in the following embodiments with reference to the accompanying drawings.

### BRIEF DESCRIPTION OF THE DRAWINGS

The disclosure may be more fully understood by reading the subsequent detailed description and examples with references made to the accompanying drawings, wherein:
FIGs. 1A and 1B are a cross-section view and a top view of a biosensor in accordance with some embodiments.
FIG. 2 is a cross-section view of a biosensor in accordance with other embodiments.
FIGs. 3, 4A-4B, and 5A-5B illustrate cell manipulation using a biosensor in accordance with some embodiments.
FIGs. 6A-6B and 7A-7B illustrate fluorescence detection using a biosensor in accordance with other embodiments.

### DETAILED DESCRIPTION OF THE DISCLOSURE

The biosensor and the cell manipulation method of the present disclosure are described in detail in the following description. In the following detailed description, for purposes of explanation, numerous specific details and embodiments are set forth in order to provide a thorough understanding of the present disclosure. The specific elements and configurations described in the following detailed description are set forth in order to clearly describe the present disclosure. It will be apparent, however, that the exemplary embodiments set forth herein are used merely for the purpose of illustration, and the invention is not limited to those exemplary embodiments. The invention is defined by the appended claims.

In addition, the drawings of different embodiments may use like and/or corresponding numerals to denote like and/or corresponding elements in order to clearly describe the present disclosure. However, the use of like and/or corresponding numerals in the drawings of different embodiments does not suggest any correlation between different embodiments. It should be understood that this description of the exemplary embodiments is intended to be read in connection with the accompanying drawings, which are to be considered part of the entire written description. The drawings are not drawn to scale. In addition, structures and devices are shown schematically in order to simplify the drawing.

In addition, the expressions "a layer is disposed above another layer" or "a layer is disposed on another layer" may indicate that the layer is in direct contact with the other layer, or that the layer is not in direct contact with the other layer, there being one or more intermediate layers disposed between the layer and the other layer.

It should be understood that, although the terms first, second, third etc. may be used herein to describe various elements, components, regions, layers, portions and/or sections, these elements, components, regions, layers, portions and/or sections should not be limited by these terms. These terms are only used to distinguish one element, component, region, layer, portion or section from another element, component, region, layer or section. Thus, a first element, component, region, layer, portion or section discussed below could be termed a second element, component, region, layer, portion or section without departing from the teachings of the present disclosure.

The term "about" typically mean +/- 10% of the stated value, more typically mean +/- 5% of the stated value, more typically +/- 3% of the stated value, more typically +/- 2% of the stated value, more typically +/- 1% of the stated value and even more typically +/- 0.5% of the stated value. The stated value of the present disclosure is an approximate value. When there is no specific description, the stated value includes the meaning of "about" or "substantially".

Unless defined otherwise, all technical and scientific terms used herein have the same meaning as commonly understood by one of ordinary skill in the art to which this disclosure belongs. It should be appreciated that, in each case, the term, which is defined in a commonly used dictionary, should be interpreted as having a meaning that conforms to the relative skills of the present disclosure and the background or the context of the present disclosure, and should not be interpreted in an idealized or overly formal manner unless so defined.

In accordance with some embodiments of the disclosure, each sensor unit of the biosensor includes an electro-wetting chamber sandwiched between the first electrodes and the second electrode and an open cell chamber above the electro-wetting chamber. A specific optical path may be formed in the non-polar liquid in the electro-wetting chamber by applying a voltage to some of the first electrodes and the second electrode, and thus an optical pattern may be generated surrounding the cell to be manipulated in the open cell chamber or outside the open cell chamber. The optical pattern in combination with an electric field generated between the top and bottom conductive layers on the opposite sides of the open cell chamber gives rise to an electrophoretic force so that a cell in the open cell chamber or outside the open cell chamber could be positioned at a predetermined location. As such, single cell manipulation may be realized using such an elaborate device, and this technology may enable a rapid and efficient drug discovery process.

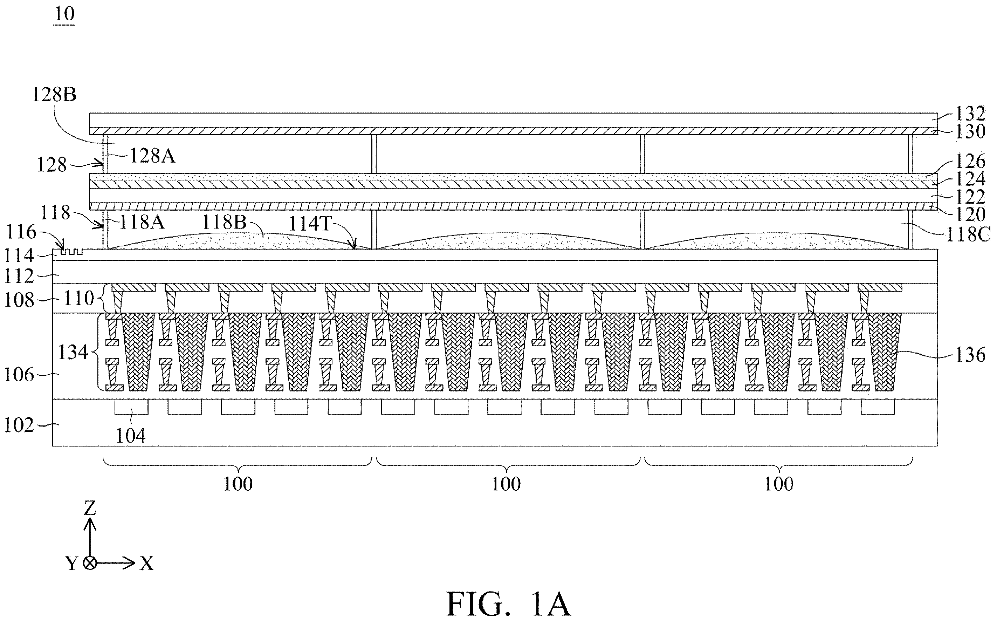

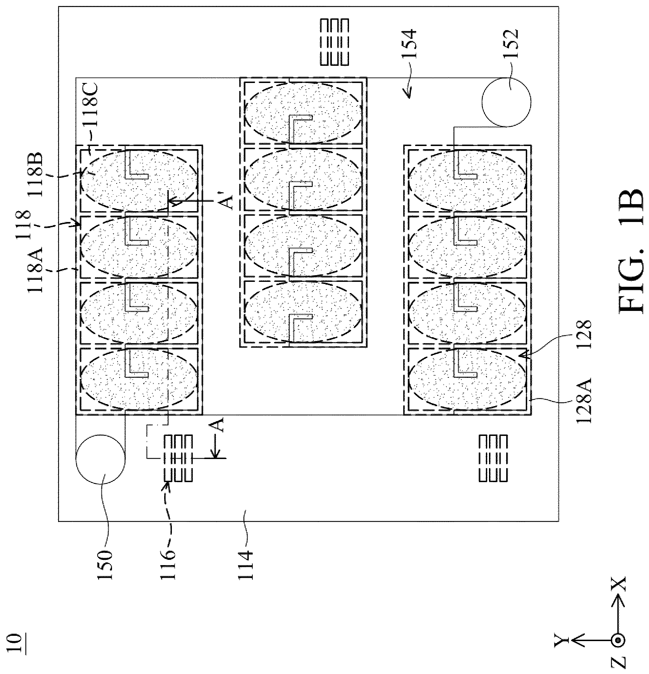

FIGs. 1A and 1B are a cross-section view and a top view of a biosensor 10 in accordance with some embodiments. It should be noted that the cross-sectional view of the biosensor 10 shown in FIG. 1A is taken along a line A-A' shown in FIG. 1B. In addition, for ease of illustration, some of the elements included in the biosensor 10 are omitted in FIG. 1B. Referring to FIG. 1A, the biosensor 10 includes a plurality of sensor units 100. Each sensor unit 100 includes a plurality of photodiodes 104. As shown in the cross-sectional view of FIG. 1A, although five photodiodes 104 are included in each sensor unit 100, the number of the photodiodes 104 in each sensor unit 100 is not limited thereto. In other embodiments, each sensor unit 100 may include more or fewer photodiodes 104, such as more than five photodiodes 104 or fewer than five photodiodes 104.

The photodiodes 104 are disposed in a substrate 102. In some embodiments, the substrate 102 may be a semiconductor substrate, for example, a silicon substrate. Furthermore, in some embodiments, the semiconductor substrate may also be an elemental semiconductor including germanium, a compound semiconductor including gallium nitride (GaN), silicon carbide (SiC), gallium arsenide (GaAs), gallium phosphide (GaP), indium phosphide (InP), indium arsenide (InAs), and/or indium antimonide (InSb), an alloy semiconductor including silicon germanium (SiGe) alloy, gallium arsenide phosphide (GaAsP) alloy, aluminum indium arsenide (AlInAs) alloy, aluminum gallium arsenide (AlGaAs) alloy, gallium indium arsenide (GaInAs) alloy, gallium indium phosphide (GaInP) alloy, and/or gallium indium arsenide phosphide (GaInAsP) alloy, or combinations thereof.

The photodiodes 104 may be configured to detect light emitted by an object or a sample. The photodiodes 104 may convert measured light into current signals, and may be connected to a source and a drain of a metal-oxide-semiconductor (MOS) transistor (not shown) that may transfer the current to another component, such as another MOS transistor. That other component may include, but is not limited to, a reset transistor, a current source follower, or a row selector for transforming the current into digital signals.

According to some embodiments, each sensor unit 100 further includes an interlayer 106. The interlayer 106 is disposed on the substrate 102 and the photodiodes 104. In one embodiment, the interlayer 106 is in direct contact with the photodiodes 104. In some embodiments, the interlayer 106 may include a dielectric material, such as silicon oxide, silicon nitride, silicon oxynitride, aluminum oxide, any other suitable dielectric material, or a combination thereof. In one embodiment, the interlayer 106 may be transparent. More specifically, the material of the interlayer 106 may have a light transmittance to light with a wavelength in a range from 200 nm to 1100 nm greater than 90%, or preferably greater than 95%. The interlayer 106 may be formed using suitable deposition techniques, such as a spin-on coating process, chemical vapor deposition (CVD), physical vapor deposition (PVD), atomic layer deposition (ALD), other suitable deposition methods, or a combination thereof.

Still referring to FIG. 1A, in some embodiments, each sensor unit 100 further includes a wiring layer 134 disposed in the interlayer 106. The wiring layer 134 may be metal wiring lines that interconnect the photodiodes 104 and the transistors (not shown) with the peripheral circuits outside of the device. In accordance with some embodiments, the material of the wiring layer 134 may include silver (Ag), aluminum (Al), gold (Au), copper (Cu), niobium (Nb), nickel (Ni), titanium (Ti), tungsten (W), silver alloy, aluminum alloy, gold alloy, copper alloy, niobium alloy, nickel alloy, titanium alloy, tungsten alloy, or a combination thereof.

In some embodiments, each sensor unit 100 may further include color filters 136 disposed in the interlayer 106. The color filters 136 may be alternately disposed between the metal wiring lines of the wiring layer 134. According to some embodiments, the color filters 136 are disposed above the photodiodes 104. More specifically, in some embodiments, each color filter 136 corresponds to one of the underlying photodiodes 104. Therefore, in the embodiments as shown in FIG. 1A, five color filters 136 correspond to five underlying photodiodes 104, and these color filters 136 are disposed above the photodiodes 104 in one-to-one correspondence.

In some embodiments, the color filters 136 may be organic color filters. The organic color filters are typically spin-on photoactive organic films with pigment additives to result in absorption of desired light frequencies (e.g., blue, green, or red). Accordingly, in some embodiments, the color filters 136 in the sensor unit 100 may have the same color or different colors from one another. For example, the color of the color filters 136 may be red, green, blue, or white. The color filters 136 with different colors may be formed in sequence by a coating, exposure, and development process at different steps. Alternatively, the color filters 136 may be formed by ink-jet printing. In some embodiments, the color filters 136 may include an absorption filter, an interference filter, a plasmonic metasurface structure, a dielectric metasurface structure, or a combination thereof.

Still referring to FIG. 1A, each sensor unit 100 may further include an electrode layer 108 on the interlayer 106. The electrode layer 108 includes a dielectric layer and a plurality of first electrodes 110 disposed in the dielectric layer. The dielectric layer of the electrode layer 108 may include a transparent dielectric material, such as silicon oxide, silicon nitride, silicon oxynitride, aluminum oxide, any other suitable dielectric material, or a combination thereof. More specifically, the material of the dielectric layer of the electrode layer 108 may have a light transmittance to light with a wavelength in a range from 200 nm to 1100 nm greater than 90%, or preferably greater than 95%.

According to some embodiments, the first electrodes 110 are disposed above the photodiodes 104 in one-to-one correspondence. In one embodiment, the first electrodes 110 are in physical contact with and electrically connect with the underlying wiring layer 134 so that a voltage could be applied to the first electrodes 110 through the wiring layer 134. In some embodiments, the material of the first electrodes 110 may include indium tin oxide (ITO), antimony-doped tin oxide (ATO), fluorine-doped tin oxide (FTO), zinc oxide (ZnO), aluminum-doped zinc oxide (AZO), indium-doped zinc oxide (IZO), gallium-doped zinc oxide (GZO), indium/gallium-doped zinc oxide (IGZO), or combinations thereof. In some embodiments, the first electrodes 110 may be transparent. More specifically, the material of the first electrodes 110 may have a light transmittance to light with a wavelength in a range from 200 nm to 1100 nm greater than 90%, or preferably greater than 95%.

According to some embodiments, the first electrodes 110 may be formed by depositing an electrode material layer followed by patterning the electrode material layer. This way, the first electrodes 110 may be formed as a patterned electrode array that generates a non-uniform electric field for electro-wetting applications. In particular, in some embodiments, as shown in FIG. 1A, the first electrodes 110 may be metal vias in combination with patterned metal layers. In addition, in some embodiments, the first electrodes 110 may not be in physical contact with the color filters 136 in the interlayer 106.

Referring again to FIG. 1A, each sensor unit 100 further includes a stack of dielectric layers 112. The stack of dielectric layers 112 is disposed on the electrode layer 108. Likewise, the stack of dielectric layers 112 is disposed above the first electrodes 110 in the electrode layer 108 as well. The stack of dielectric layers 112 may prevent light for fluorescence excitation and/or for cell manipulation from passing through and being absorbed by the photodiodes 104, thereby decreasing the signal-to-noise ratio of the biosensor 10. In one embodiment, the stack of dielectric layers 112 is in direct contact with the first electrodes 110.

According to some embodiments, the stack of dielectric layers 112 may include an interference filter. In particular, the interference filter of the stack of dielectric layers 112 may be formed of at least two different dielectric materials that are deposited alternately. One of the dielectric materials may be a dielectric material having a low refractive index, and another one may be a dielectric material having a high refractive index, which is greater than that of the former one. In one embodiment, the topmost layer in the stack of dielectric layers 112 may be the dielectric material with a low refractive index. In some embodiments, the dielectric material with a high refractive index, such as greater than about 1.7 in the visible-light wavelength, may include titanium oxide (TiO₂), silicon nitride (Si₃N₄), hafnium oxide (HfO₂), zirconium oxide (ZrO₂), aluminum oxide (Al₂O₃), niobium oxide (Nb₂O₅), polycrystalline silicon (polysilicon), amorphous silicon (a-Si), or a combination thereof. In some embodiments, the dielectric material with a low refractive index, such as less than about 1.7 in the visible-light wavelength, may include silicon oxide (SiO₂). In accordance with some embodiments, the overall thickness of the stack of dielectric layers 112 may be between about 0.1 µm and about 5.0 µm.

In some embodiments, each sensor unit 100 further includes a waveguide layer 114. The waveguide layer 114 is disposed on the stack of dielectric layers 112. According to some embodiments, the waveguide layer 114 is formed of a material with a high refractive index, such as higher than about 1.5. The material having a high refractive index of the waveguide layer 114 may enable light, generated from a light source (not shown), to propagate through the waveguide layer 114 until it encounters a medium with a refractive index between those of the water (n ~1.33) and the waveguide layer 114. The light may pass through the medium with the lower refractive index, and part of light may further propagate through the medium while the rest of light may still propagate in the waveguide layer 114. In some embodiments, the waveguide layer 114 may be a linear waveguide or a planar waveguide (as shown in FIG. 1B). According to some embodiments, the material of the waveguide layer 114 may include tantalum oxide (Ta₂O₅), silicon nitride (Si₃N₄), niobium oxide (Nb₂O₅), titanium oxide (TiO₂), aluminum oxide (Al₂O₃), or a combination thereof. In some embodiments, the material of the waveguide layer 114 may include polymer, such as polynorbornene, SU8, polydimethylsiloxane (PDMS), epoxy, or a combination thereof.

As shown in FIGs. 1A and 1B, in some embodiments, there is a grating structure 116 in the waveguide layer 114. In particular, the grating structure 116 is formed in the region of the waveguide layer 114 that no sensor unit 100 is disposed in. The grating structure 116 may facilitate an optical beam from a light source to enter the waveguide layer 114, namely to be coupled into the waveguide layer 114, and the optical beam may propagate through the waveguide layer 114 accordingly. According to some embodiments, the grating structure 116 may be formed by partially patterning the waveguide layer 114 using any suitable etching methods. In one embodiment, the grating structure 116 in the waveguide layer 114 does not expose the underlying stack of dielectric layers 112.

Furthermore, each sensor unit 100 further includes an electro-wetting chamber 118 and a second electrode 120. The electro-wetting chamber 118 is disposed on the waveguide layer 114, and the second electrode 120 is disposed on the electro-wetting chamber 118. In some embodiments, the top surface 114T of the waveguide layer 114 may be exposed in the electro-wetting chamber 118. Referring to FIGs. 1A and 1B, there is a non-polar liquid 118B disposed in each electro-wetting chamber 118 of the sensor unit 100. In one embodiment, the non-polar liquid 118B may be an oil droplet. When applying a voltage to one or more of the first electrodes 110 and the second electrode 120, the non-polar liquid 118B may be deformed because of the electric field caused by the voltage. Applying a voltage to either some of or all of the first electrodes 110 may cause the non-polar liquid 118B to bead in the electro-wetting chamber 118, and the non-polar liquid 118B may be in direct contact with both the waveguide layer 114 and the second electrode 120. Accordingly, an optical path may be formed in the non-polar liquid 118B and between the waveguide layer 114 and the second electrode 120.

In some embodiments, the material of the second electrode 120 may include indium tin oxide (ITO), antimony-doped tin oxide (ATO), fluorine-doped tin oxide (FTO), zinc oxide (ZnO), aluminum-doped zinc oxide (AZO), indium-doped zinc oxide (IZO), gallium-doped zinc oxide (GZO), indium/gallium-doped zinc oxide (IGZO), or combinations thereof. According to some embodiments, the second electrode 120 may be transparent. More specifically, the material of the second electrode 120 may have a light transmittance to light with a wavelength in a range from 200 nm to 1100 nm greater than 90%, or preferably greater than 95%.

In some embodiments, the refractive index of the non-polar liquid 118B is lower than that of the waveguide layer 114. As explained above, when the light propagating through the waveguide layer 114 encounters the non-polar liquid 118B, which has a lower refractive index, in the electro-wetting chamber 118, it may enter the optical path formed in the non-polar liquid 118B and may further propagate through the non-polar liquid 118B.

In some embodiments, the non-polar liquid 118B may be colored red, green, or blue to form a pixelated non-polar liquid 118B. The pixelated non-polar liquid 118B may function as controllable color filter to allow light with a specific color to pass through. This way, samples having different fluorescence molecules in a sensor unit 100 may be concomitantly excited even using the same light source, and various fluorescent signals with different emission spectrums may be identified by a set of photodiodes 104 with different colored non-polar liquid 118B in a sensor unit 100 for more sophisticated analysis.

As shown in FIGs. 1A and 1B, the electro-wetting chamber 118 includes an isolation structure 118A. The isolation structure 118A is disposed between the waveguide layer 114 and the second electrode 120 and surrounding the non-polar liquid 118B. The isolation structure 118A is configured to define the closed space of the electro-wetting chamber 118 and to provide structural support for the electro-wetting chamber 118. In accordance with some embodiments, the material of the isolation structure 118A may include silicon oxide (SiO₂), a polymer material, or a combination thereof. For example, the polymer material may include, but is not limited to, bisbenzocyclobutene (BCB), polyimide (PI), polymethylmethacrylate (PMMA), cycloolefin polymer (COP), polycarbonate (PC), another suitable material, or a combination thereof.

Moreover, in some embodiments, a polar liquid 118C is further disposed in the electro-wetting chamber 118. The polar liquid 118C fills the remaining space in the electro-wetting chamber 118 that is not occupied by the non-polar liquid 118B. In some embodiments, the refractive index of the polar liquid 118C is lower than that of the non-polar liquid 118B. Therefore, the light propagating through the waveguide layer 114 is prone to enter the non-polar liquid 118B rather than the polar liquid 118C. According to some embodiments, the polar liquid 118C may be water.

Referring again to FIG. 1A, in some embodiments, each sensor unit 100 further includes a supporting layer 122. The supporting layer 122 is disposed on the second electrode 120. The supporting layer 122 may include any suitable materials. In some embodiments, the supporting layer 122 may be a flexible material, such as polyethylene terephthalate (PET), polysulfone (PES), polyimide (PI), polycarbonate (PC), polymethylmethacrylate (PMMA), silicone, epoxy, or a combination thereof. In other embodiments, the supporting layer 122 may be a rigid material, such as a glass, sapphire, silicon oxide, or a combination thereof. In addition, according to some embodiments, the supporting layer 122 may be transparent. More specifically, the material of the supporting layer 122 may have a light transmittance to light with a wavelength in a range from 200 nm to 1100 nm greater than 90%, or preferably greater than 95%.

Still referring to FIG. 1A, each sensor unit 100 further includes a bottom conductive layer 124, a photoconductive layer 126, an open cell chamber 128, and a top conductive layer 130. The bottom conductive layer 124 is disposed on the supporting layer 122. The photoconductive layer 126 is disposed on the bottom conductive layer 124. The open cell chamber 128 is disposed on the photoconductive layer 126 and configured to receive a cell. The top conductive layer 130 is disposed on the open cell chamber 128.

In some embodiments, the materials of the bottom conductive layer 124 and the top conductive layer 130 may include indium tin oxide (ITO), antimony-doped tin oxide (ATO), fluorine-doped tin oxide (FTO), zinc oxide (ZnO), aluminum-doped zinc oxide (AZO), indium-doped zinc oxide (IZO), gallium-doped zinc oxide (GZO), indium/gallium-doped zinc oxide (IGZO), or combinations thereof. In addition, according to some embodiments, the bottom conductive layer 124 and/or the top conductive layer 130 may be transparent. More specifically, the materials of the bottom conductive layer 124 and/or the top conductive layer 130 may have a light transmittance to light with a wavelength in a range from 200 nm to 1100 nm greater than 90%, or preferably greater than 95%.

In some embodiments, the photoconductive layer 126 may include amorphous silicon. In one embodiment, the photoconductive layer 126 may include amorphous hydrogenated silicon. The photoconductive layer 126 exhibits high resistance in the absence of light and high conductance under illumination. Therefore, to form a non-uniform electric field in the open cell chamber 128 and to realize cell manipulation, a portion of the photoconductive layer 126 may be converted from an insulated state into a conductive state by an optical pattern generated using the electro-wetting property of the electro-wetting chamber 118. In accordance with some embodiments, the thickness of the photoconductive layer 126 may be between about 0.1 µm and about 5.0 µm.

According to some embodiments, the photoconductive layer 126 may be a single-layered structure or a multi-layered structure. In the embodiments in which the photoconductive layer 126 is a multi-layered structure, the photoconductive layer 126 may be formed of an n-doped amorphous hydrogenated silicon and an un-doped amorphous hydrogenated silicon on the n-doped amorphous hydrogenated silicon. The multi-layered structure of the n-doped amorphous hydrogenated silicon and the un-doped amorphous hydrogenated silicon can increase the conductivity and be used when the fluid is a cell culture medium. The n-doped amorphous hydrogenated silicon of the photoconductive layer 126 may be doped with phosphorus, arsenic, antimony, or a combination thereof. In addition, the term "un-doped" used herein means that a minimum level or a baseline level of dopants are present in the material due to unavoidable introduction of some foreign material during the otherwise intrinsic deposition process. As a general matter, the un-doped amorphous hydrogenated silicon of the photoconductive layer 126 may have a dopant concentration under 5×10¹⁷ atoms/cm³. However, it is desirable to maintain the un-doped amorphous hydrogenated silicon in an un-doped state. In one embodiment, the "un-doped" amorphous hydrogenated silicon refers to the amorphous hydrogenated silicon that is not implanted with other elements, such as a III-V semiconductor, by diffusion and ion implantation.

As shown in FIGs. 1A and 1B, the open cell chamber 128 may include an isolation structure 128A for supporting the open cell chamber 128 and a receiving space 128B for receiving a cell. The material of the isolation structure 128A may be similar to or the same as that of the isolation structure 118A, which is not repeated herein.

In some embodiments, each sensor unit 100 may further include a cladding layer 132. The cladding layer 132 is disposed on the top conductive layer 130. The cladding layer 132 may include any suitable materials. In some embodiments, the cladding layer 132 may be a flexible material, such as polyethylene terephthalate (PET), polysulfone (PES), polyimide (PI), polycarbonate (PC), polymethylmethacrylate (PMMA), silicone, epoxy, or a combination thereof. In other embodiments, the cladding layer 132 may be a rigid material, such as a glass, sapphire, silicon oxide, or a combination thereof. In addition, according to some embodiments, the cladding layer 132 may be transparent. More specifically, the material of the cladding layer 132 may have a light transmittance to light with a wavelength in a range from 200 nm to 1100 nm greater than 90%, or preferably greater than 95%.

Referring to FIG. 1B, in some embodiments, the biosensor 10 further includes an inlet 150, an outlet 152, and microfluidic channel 154. The microfluidic channel 154 connects the inlet 150 as an entrance for cells, buffers, reagents, and culture media from an external reservoir (not shown) with the outlet 152 for waste disposal. Furthermore, in some embodiments, the microfluidic channel 154 may connect with the open cell chamber 128 to provide cells, buffers, reagents, and culture media. The microfluidic channel 154 may be a single flow channel providing a flow path for introducing cells or solutions.

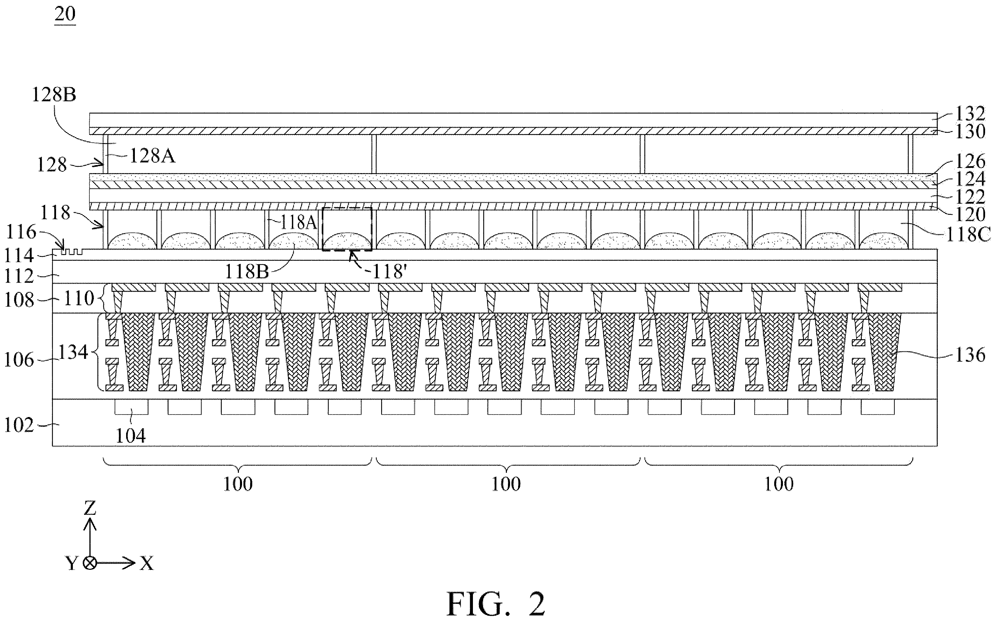

FIG. 2 is a cross-section view of a biosensor 20 in accordance with other embodiments. The biosensor 20 in FIG. 2 is similar to the biosensor 10 in FIGs. 1A and 1B, except that the electro-wetting chamber 118 in each sensor unit 100 includes a plurality of electro-wetting cells 118'. The electro-wetting cells 118' are separated from one another by isolation structures 118A. As shown in FIG. 2, in some embodiments, non-polar liquid 118B is disposed in each electro-wetting cell 118'. Similarly, the remaining space in the electro-wetting cell 118' that is not occupied by the non-polar liquid 118B is filled with the aforementioned polar liquid 118C. According to some embodiments, the electro-wetting cells 118' of the electro-wetting chamber 118 are disposed above the first electrodes 110 in one-to-one correspondence. Likewise, the number of the electro-wetting cells 118' included in the electro-wetting chamber 118 is not particularly limited as long as one electro-wetting cell 118' could correspond to one first electrode 110.

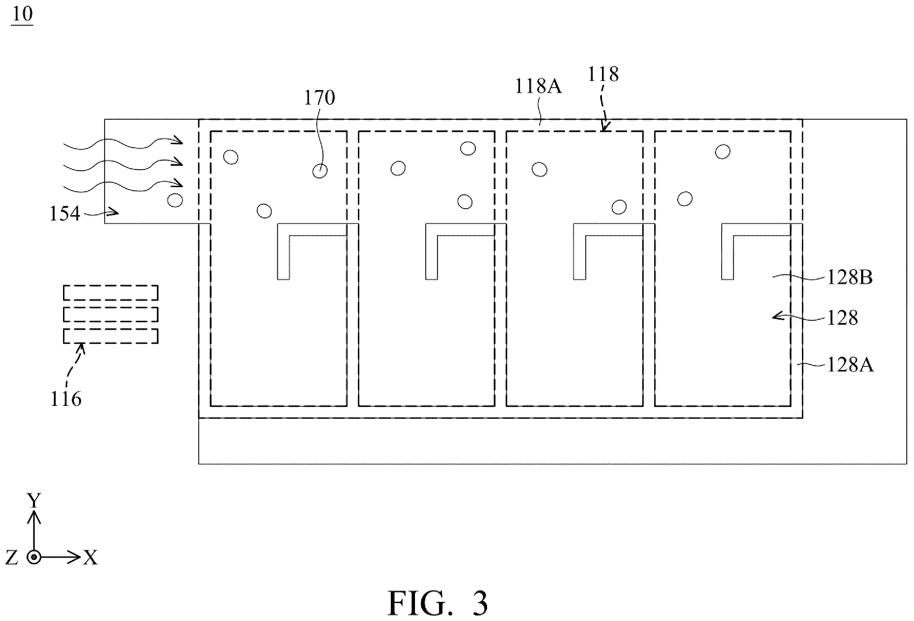

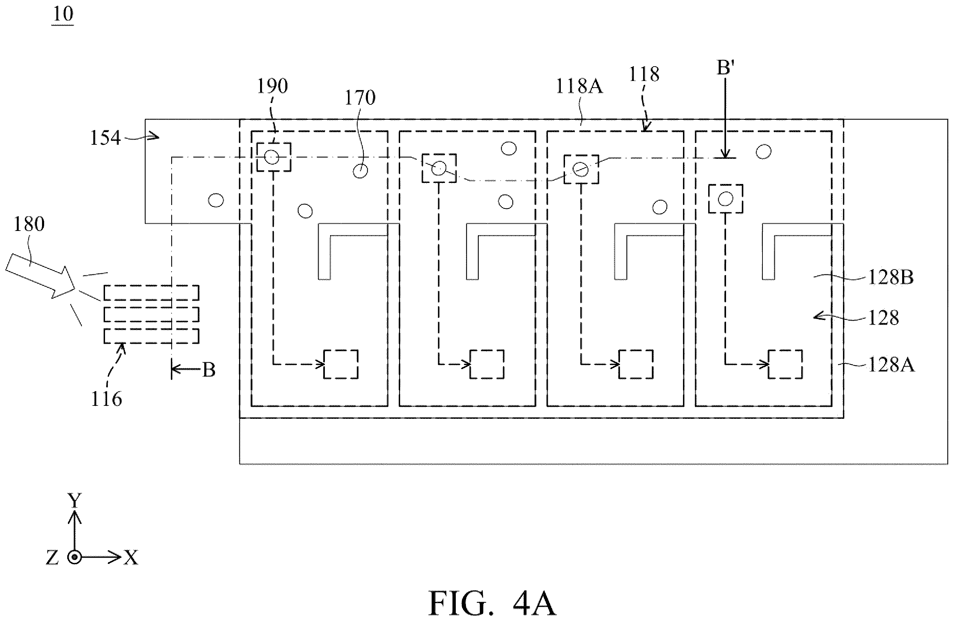

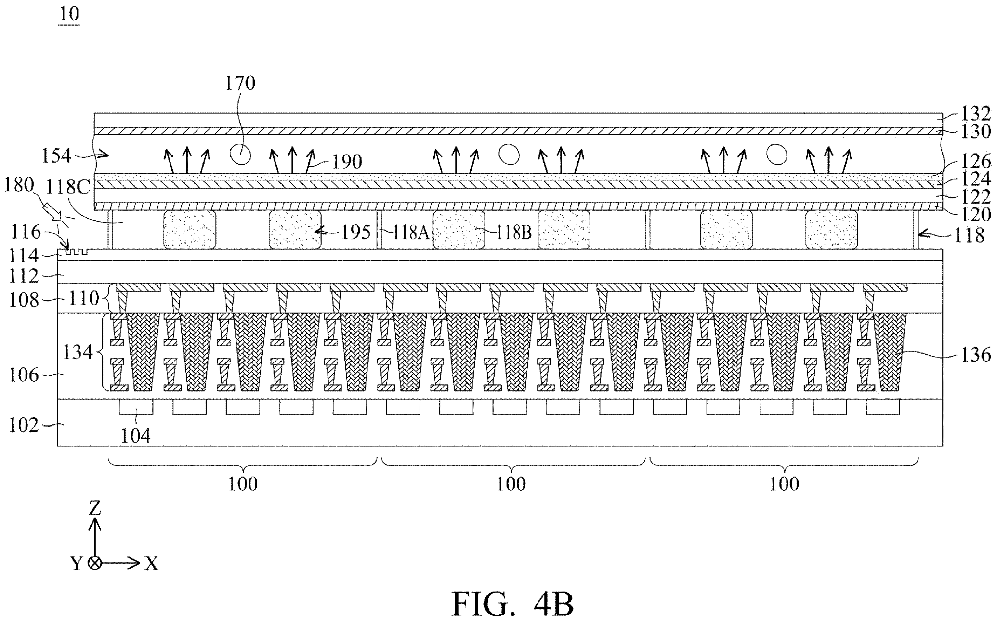

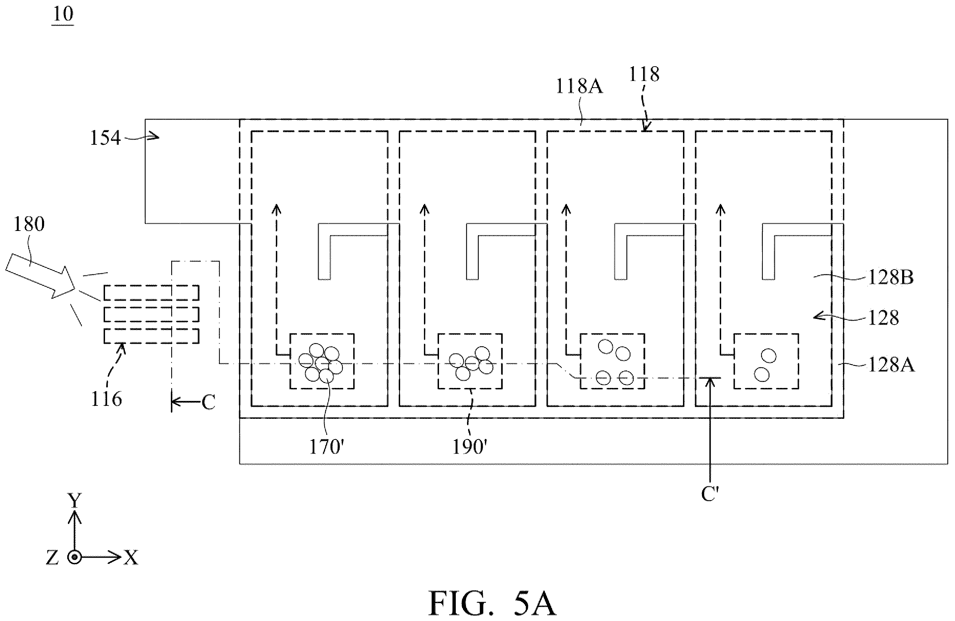

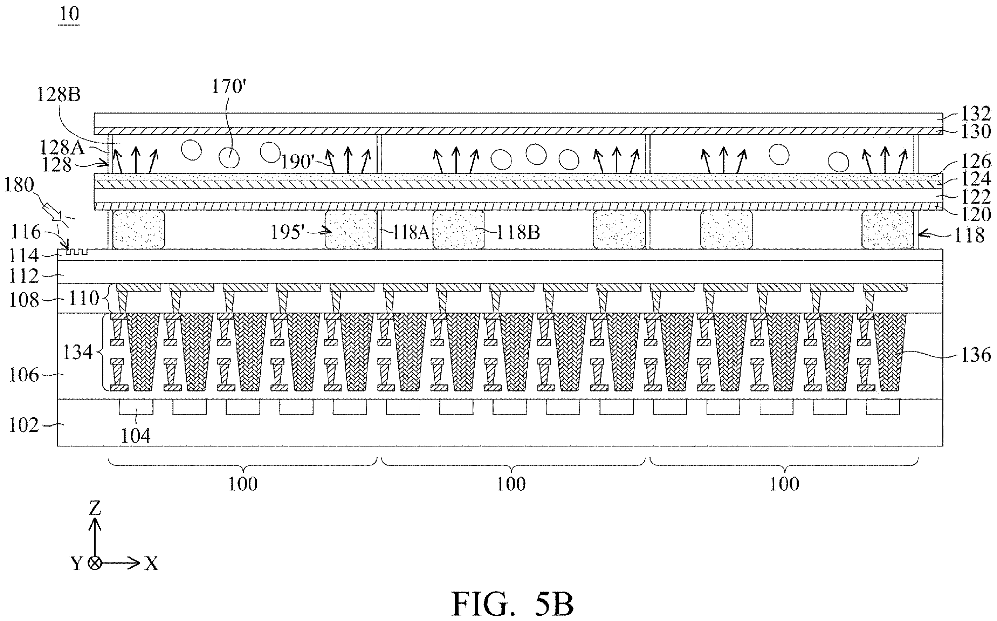

FIGs. 3, 4A-4B, and 5A-5B illustrate cell manipulation using the biosensor 10 shown in FIGs. 1A and 1B in accordance with some embodiments. It should be noted that the cross-sectional views of the biosensor 10 in FIGs. 4B and 5B are taken along lines B-B' and C-C' shown in the top views of FIGs. 4A and 5A, respectively. In addition, for ease of illustration, some of the elements included in the biosensor 10 are omitted in FIGs 3, 4A, and 5A.

Referring to FIG. 3, the biosensor 10 is provided. The solution containing cells 170 to be manipulated and screened is introduced into the biosensor 10. In particular, the cell manipulation starts at introducing the cells 170 into the microfluidic channel 154 of the biosensor 10 from the inlet (not shown in FIG. 3). After introducing the cells 170, an image may be captured by the photodiodes of the sensor unit 100 under visible light to identify locations of the cells 170 and the isolation structure 128A of the open cell chamber 128 in the biosensor 10.

Next, referring to FIGs. 4A and 4B, a voltage is applied to the bottom conductive layer 124 and the top conductive layer 130. Despite the voltage applied to the bottom conductive layer 124 and the top conductive layer 130, no electric filed is formed between the bottom conductive layer 124 and the top conductive layer 130 because the photoconductive layer 126 is in an insulated state without being irradiated. Subsequently, a voltage is applied to some of the first electrodes 110 and the second electrode 120 to form a first electric field in the electro-wetting chamber 118. After applying voltage to the first electrodes 110 and the second electrode 120, the non-polar liquid 118B in the electro-wetting chamber 118 is deformed with a predetermined shape according to the applied first electric field. Meanwhile, according to some embodiments, the deformed non-polar liquid 118B may be in direct contact with the waveguide layer 114 and the second electrode 120. Accordingly, an optical path 195 can be formed in the non-polar liquid 118B for light propagating through the waveguide layer 114 to pass through.

Next, a laser beam 180 is generated from an external light source (not shown) and is coupled into the waveguide layer 114 through the grating structure 116. The laser beam 180 may propagate though the waveguide layer 114 until it encounters the deformed non-polar liquid 118B. The laser beam 180 may penetrate the optical path 195 formed in the non-polar liquid 118B and reach the microfluidic channel 154 to form a first optical pattern 190 that surrounds a cell 170 to be positioned in the receiving space 128B of the open cell chamber 128. As shown in FIGs. 4A and 4B, the selected cell 170 surrounded by the first optical pattern in the microfluidic channel 154 can be positioned in the receiving space 128B. In particular, by applying a voltage to different first electrodes 110, the first optical pattern 190 may move from the microfluidic channel 154 toward the receiving space 128B. Simultaneously, the cell 170 surrounded by the first optical pattern 190 may move from the microfluidic channel 154 toward the receiving space 128B as well. This way, a single cell 170 may be placed in the open cell chamber 128 each time. After leaving one cell 170 in each open cell chamber 128, the remaining cells 170 keeping still in the microfluidic channel 154 are removed from the biosensor 10 by purging with phosphate buffer saline (PBS) or culture medium suitable for the cell 170 to be incubated in the open cell chamber 128.

Referring to FIGs. 5A and 5B, according to some embodiments, the cell (e.g., the cell 170 in FIGs. 4A and 4B) left in the open cell chamber 128 is incubated for a period of time to generate multiple cells 170' that are derived from the original cell. After generation of multiple cells 170', a voltage is applied to some of the first electrodes 110 and the second electrode 120, enabling a second optical path 195' to be formed in the non-polar liquid 118B. The laser beam 180 propagating through the waveguide layer 114 may pass through the second optical path 195' in the non-polar liquid 118B, forming a second optical pattern 190' surrounding the cells 170' in the receiving space 128B of the open cell chamber 128. In some embodiments, the first optical pattern 190 formed in the previous steps of cell manipulation has a first projected area on the horizontal plane (e.g., the X-Y plane, shown in FIGs. 4A and 4B). The bottom of the open cell chamber 128 is located at the horizontal plane. The second optical pattern 190' shown in FIGs. 5A and 5B has a second projected area on the same horizontal plane. The second projected area of the second optical pattern 190' is greater than the first projected area of the first optical pattern 190 so that all the cells 170' after incubation may be surrounded by the second optical pattern 190' and can thus be harvested from the biosensor 10.

Referring again to FIGs. 5A and 5B, the second optical pattern 190' may gradually move from the open cell chamber 128 toward the microfluidic channel 154 by applying a voltage to different first electrodes. Accordingly, the cells 170' surrounded by the moving second optical pattern 190' may be pushed toward the microfluidic channel 154 at the same time. Finally, PBS or culture medium is introduced into the microfluidic channel 154 of the biosensor 10 to direct the cells 170' toward the outlet (not shown) of the biosensor 10 through the microfluidic channel 154 and thus to harvest these cells 170' for further applications.

In accordance with some embodiments, the optical pattern formed by the laser beam passing through the optical path in the non-polar liquid in combination with the electric field generated by applying a voltage to the bottom conductive layer and the top conductive layer gives rise to an electrophoretic force that confines the cell in the optical pattern. By applying the voltage to different first electrodes, the optical pattern may gradually move toward a predetermined direction. As the optical pattern moves, the electrophoretic force shifts and pushes the cell surrounded by the optical pattern toward the predetermined direction. This way, a single cell may be manipulated each time using the biosensor provided by the embodiments of the disclosure.

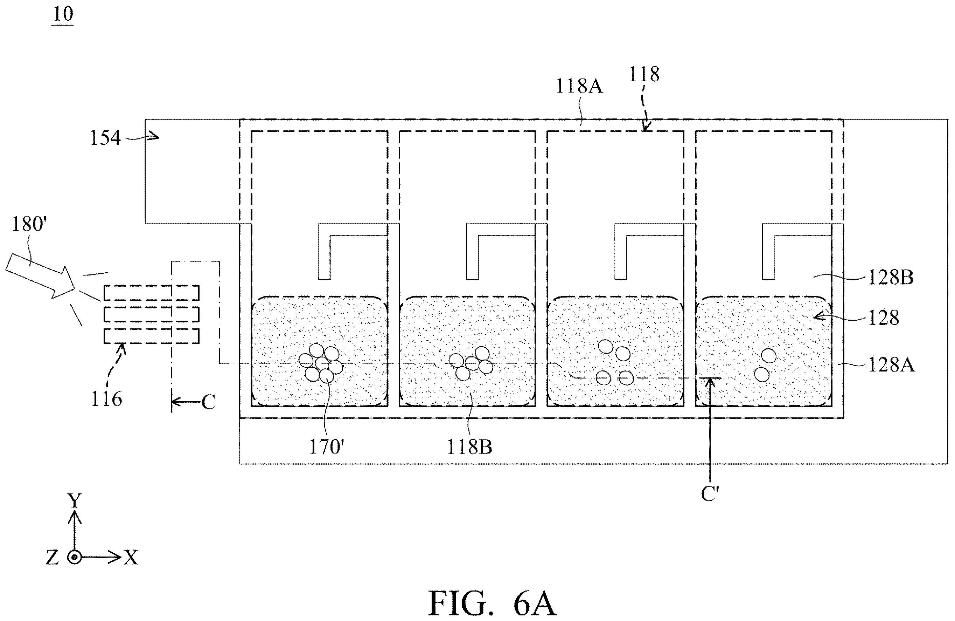

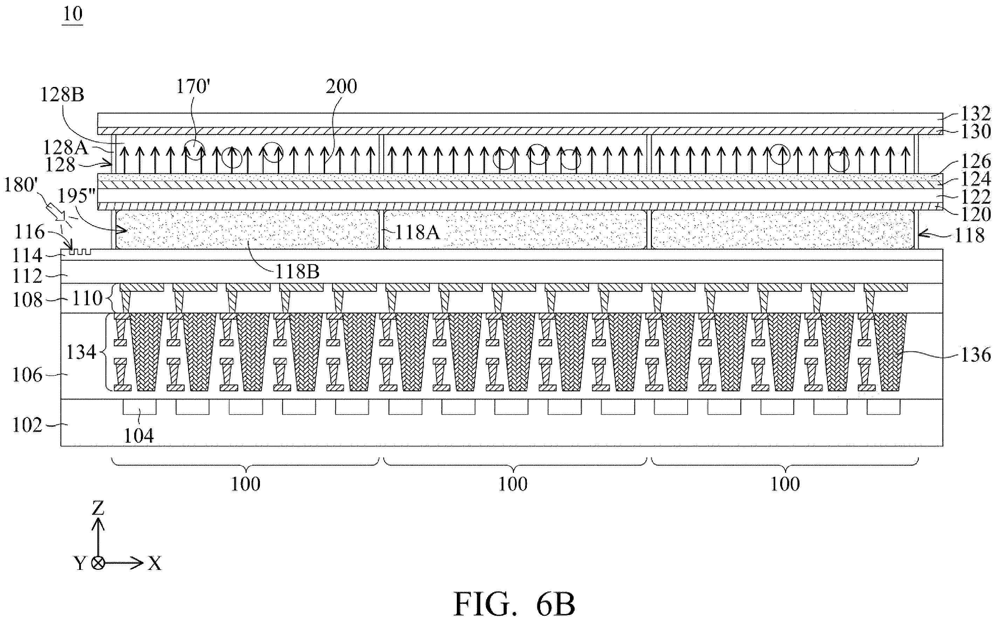

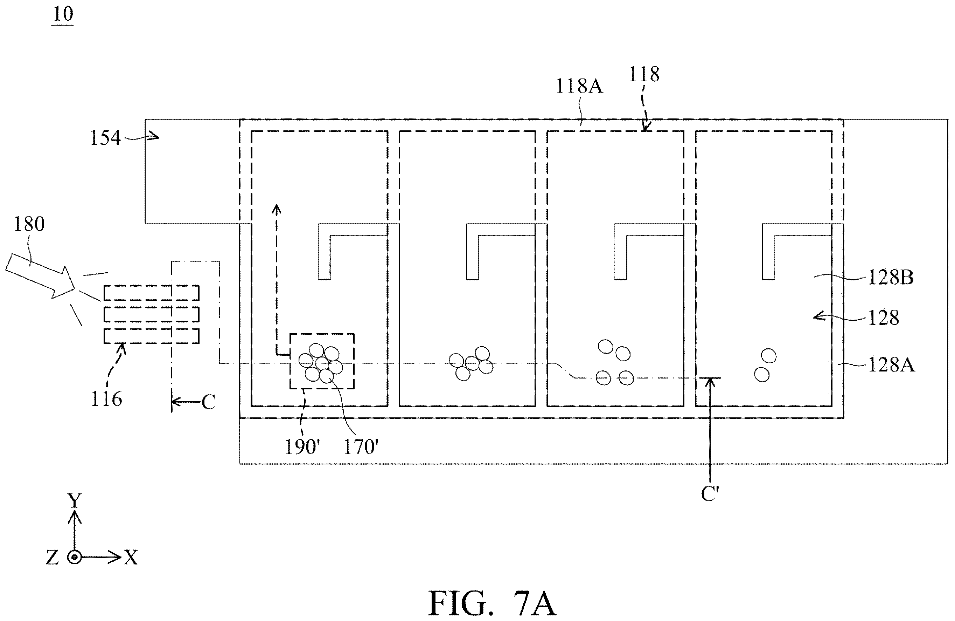

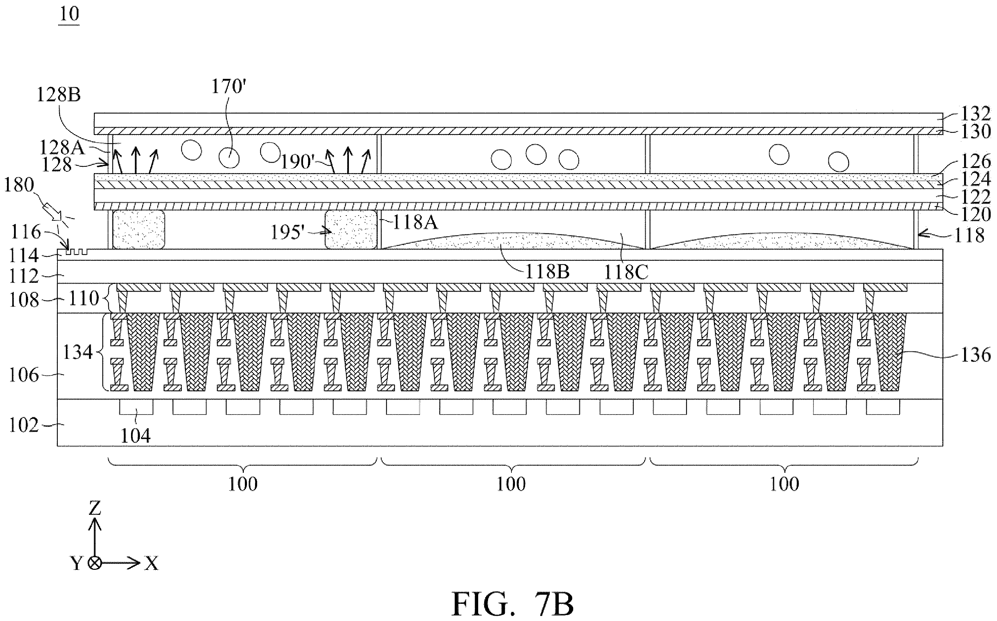

FIGs. 6A-6B and 7A-7B illustrate fluorescence detection using the biosensor 10 shown in FIGs. 1A and 1B in accordance with other embodiments. It should be noted that the cross-sectional views of the biosensor 10 in FIGs. 6B and 7B are taken along the line C-C' shown in the top views of FIGs. 6A and 7A, respectively. In addition, for ease of illustration, some of the elements included in the biosensor 10 are omitted in FIGs 6A and 7A.

Referring to FIGs. 6A and 6B, in some embodiments, the cell incubation after the cell manipulation step as shown in FIG. 4A is followed by the fluorescent detection step. In particular, the cells 170' may be labeled with a fluorescent tag targeting a specific molecule owned by the cells 170' or having a retaining property on the surface of the cells 170' or inside the cells 170'. For example, in some embodiments, the fluorescent tag may be an antibody conjugated with Alexa 488, a bright, green-fluorescent dye that may have a maximum excitation when using a 488 nm laser beam, to label a specific surface protein expressed on the surface of the cells 170'. If the cells 170' indeed express the surface protein targeted by the antibody, the dye conjugated with the antibody generates emission light when using the 488nm laser beam, and the cells 170' can be illuminated and be detected by the photodiodes 104 of each sensor unit 100. In other embodiments, the dye used for antibody conjugation and cell labeling may include FITC, SYBR Green, fluorescein, Calcein AM, DyLight 488, and etc.

During the fluorescence detection, a voltage is applied to all the first electrodes 110 underlying the electro-wetting chamber 118 and the second electrode 120. A second electric field is formed in the electro-wetting chamber 118. According to some embodiments, the second electric field area used in the fluorescence detection is larger than the aforementioned electric field area used in the cell manipulation step shown in FIG. 4A. Subsequently, the non-polar liquid 118B is deformed by the second electric field, and thus the non-polar liquid 118B is in direct contact with the waveguide layer 114 and the second electrode 120. Furthermore, as shown in FIG. 6A, in some embodiment, the deformed non-polar liquid 118B may bead directly below the open cell chamber 128. After deformation of the non-polar liquid 118B, a third optical path 195" is formed in the non-polar liquid 118B. Another laser beam 180' that has a different wavelength than the laser beam 180 is used to irradiate the cells 170' having the fluorescent tag. According to some embodiments, the wavelength of laser beam 180' may be shorter than that of laser beam 180, which is used for cell manipulation.

Still referring to FIGs. 6A and 6B, the laser beam 180' may enter and be coupled into the waveguide layer 114 through the grating structure 116 in the waveguide layer 114. Once the propagating laser beam 180' in the waveguide layer 114 encounters the deformed non-polar liquid 118B in the electro-wetting chamber 118, the laser beam 180' enters the third optical path 195" formed in the non-polar liquid 118B and reaches the open cell chamber 128. As such, the cells 170' in the open cell chamber 128 may be irradiated with a light pattern 200 formed by the laser beam 180', and the fluorescent tag of the cells 170' may be excited and generate emission light accordingly. After excitation, a fluorescent signal (i.e., the emission light) generated by the cells 170' may penetrate the underlying layers and may be detected by the photodiodes 104 of each sensor unit 100.

By detecting the fluorescent signals obtained using the aforementioned detection method and determining what open cell chambers the desired cells 170' are located at, cells 170' with a desired property, such as capable of expressing and producing specific bio-molecules, may be identified and be further harvested using the cell manipulation step shown in FIGs. 7A and 7B.

Referring to FIGs. 7A and 7B, the cells 170' identified with the desired property are selected because the desired property (e.g., expressing a specific protein that can be detected using the fluorescent tag and having a better growth rate) is conducive to further applications. To obtain these cells 170' from the open cell chamber 128, a voltage is applied to some of the first electrodes 110 and the second electrode 120 in the sensor unit 100, thereby deforming the non-polar liquid 118B and forming the second optical path 195' in the non-polar liquid 118B. Next, the laser beam 180 is coupled into the waveguide layer 114 through the grating structure 116, and it further passes through the second optical path 195' in the non-polar liquid 118B. Furthermore, the second optical pattern 190' surrounding the cells 170' is formed in the open cell chamber 128 by the laser beam 180 passing through the second optical path 195'. By applying the voltage to different first electrodes 110, the second optical pattern 190' gradually moves from the open cell chamber 128 to the microfluidic channel 154. Simultaneously, the cells 170' surrounded by the second optical pattern 190' are positioned in the microfluidic channel 154 from the receiving space 128B of the open cell chamber 128. Finally, these cells 170' may be harvested by introducing PBS or culture medium into the microfluidic channel 154 and may leave the microfluidic channel 154 via the outlet (not shown) of the biosensor 10.

In summary, according to some embodiments of the disclosure, the sensor unit of the biosensor includes an electro-wetting chamber in which a non-polar liquid is disposed and an open cell chamber above the electro-wetting chamber. The electro-wetting technique combined with the electrophoretic force enables simple and rapid single cell manipulation and fluorescent detection in the same tiny biosensor. Such an elaborate device is conducive to efficient drug development with high throughput, thereby speeding the pace toward production of available medicine for patients suffering from formidable diseases.

## Claims

1. A biosensor comprising: a plurality of sensor units (100), wherein each of the sensor units (100) comprises:
a plurality of photodiodes (104);
a plurality of first electrodes (110) disposed above the photodiodes (104), wherein the first electrodes (110) are transparent;
an electro-wetting chamber (118) disposed above the first electrodes (110), wherein a non-polar liquid (118B) is disposed in the electro-wetting chamber (118);
a second electrode (120) disposed on the electro-wetting chamber (118), wherein the second electrode (120) is transparent;
a bottom conductive layer (124) for applying a voltage thereto and disposed above the second electrode (120), wherein the bottom conductive layer (124) is transparent;
a photoconductive layer (126) disposed on the bottom conductive layer (124);
an open cell chamber (128) disposed on the photoconductive layer (126) and configured to receive a cell;
a top conductive layer (130) for applying a voltage thereto and disposed on the open cell chamber (128); and
a waveguide layer (114) disposed between the first electrodes (110) and the electro-wetting chamber (118), wherein a top surface of the waveguide layer (114) is exposed in the electro-wetting chamber (118), and a refractive index of the waveguide layer (114) is greater than a refractive index of the non-polar liquid (118B); and
wherein the non-polar liquid (118B) is configured to be deformed, because of an electric field caused by a voltage applied to one or more of the first electrodes (110) and the second electrode (120), such that an optical path (195) is formed in the non-polar liquid (118B) and between the waveguide layer (114) and the second electrode (120).

2. The biosensor as claimed in claim 1, wherein the photoconductive layer (126) comprises amorphous silicon.

3. The biosensor as claimed in claim 1 or 2, wherein each of the sensor units (100) further comprises a stack of dielectric layers (112) disposed between the first electrodes (110) and the electro-wetting chamber (118), wherein the stack of dielectric layers (112) comprises an interference filter, wherein the stack of dielectric layers (112) is in direct contact with the first electrodes (110).

4. The biosensor as claimed in any one of the preceding claims, wherein the electro-wetting chamber (118) comprises a plurality of electro-wetting cells (118') separated from one another by isolation structures (118A), and the non-polar liquid (118B) is disposed in each of the electro-wetting cells (118'), wherein the electro-wetting cells (118') are disposed above the first electrodes (110) in one-to-one correspondence.

5. The biosensor as claimed in any one of the preceding claims, wherein a polar liquid (118C) is further disposed in the electro-wetting chamber (118), and a refractive index of the polar liquid (118C) is lower than a refractive index of the non-polar liquid (118B).

6. The biosensor as claimed in any one of the preceding claims, wherein the electro-wetting chamber (118) comprises an isolation structure (118A) between the first electrodes (110) and the second electrode (120) and surrounding the non-polar liquid (118B).

7. The biosensor as claimed in any one of the preceding claims, wherein the top conductive layer (130) is transparent.

8. The biosensor as claimed in any one of the preceding claims, further comprising a microfluidic channel (154) connecting with the open cell chamber (128).

9. The biosensor as claimed in any one of the preceding claims, wherein each of the sensor units (100) further comprises a color filter (136) between the photodiodes (104) and the first electrodes (110), and the color filter (136) is disposed above the photodiodes (104) in one-to-one correspondence.

10. A cell manipulation method, comprising:
providing the biosensor as claimed in any one of the preceding claims;
introducing cells (170) into the biosensor;
applying a voltage to the bottom conductive layer (124) and the top conductive layer (130);
applying a voltage to one or more of the first electrodes (110) and the second electrode (120) to form a first electric field in the electro-wetting chamber (118), wherein the non-polar liquid (118B) is deformed by the first electric field, and a first optical path (195) is formed in the non-polar liquid (118B);
forming a first optical pattern (190) surrounding one of the cells (170) using a first laser beam (180) that passes through the first optical path (195); and
leaving the cell (170) surrounded by the first optical pattern (190) in the open cell chamber (128) and removing the remaining cells (170) from the biosensor.

11. The cell manipulation method as claimed in claim 10, further comprising:
incubating the cell (170) left in the open cell chamber (128) to generate multiple cells (170') derived from the cell (170);
forming a second optical pattern (190') surrounding the cells (170') derived from the cell (170) using the first laser beam (180); and
harvesting the cells (170') derived from the cell (170) and surrounded by the second optical pattern (190') from the open cell chamber (128).

12. The cell manipulation method as claimed in claim 11, wherein the first optical pattern (190) and the second optical pattern (190') respectively have a first projected area and a second projected area on a horizontal plane on which a bottom of the open cell chamber (128) is located, and the second projected area is greater than the first projected area.

13. The cell manipulation method as claimed in any one of the preceding claims 10-12, further comprising:
incubating the cell (170) left in the open cell chamber (128) to generate multiple cells (170') derived from the cell (170);
labeling the cells (170') with a fluorescent tag;
applying a voltage to the first electrodes (110) and the second electrode (120) to form a second electric field whose area is larger than the first electric field, wherein the non-polar liquid (118B) is deformed by the second electric field, and a third optical path (195") is formed in the non-polar liquid (118B);
irradiating the cells (170') having the fluorescent tag with a second laser beam (180') that passes through the third optical path (195") to excite the fluorescent tag; and
obtaining a fluorescent signal emitted by the fluorescent tag after being excited.

14. The cell manipulation method as claimed in claim 13, wherein the first laser beam (180) has a first wavelength, and the second laser beam (180') has a second wavelength that is shorter than the first wavelength.

## Patentansprüche

1. Biosensor, der Folgendes umfasst: mehrere Sensoreinheiten (100), wobei jede der Sensoreinheiten (100) Folgendes umfasst:
mehrere Photodioden (104);
mehrere erste Elektroden (110), die über den Photodioden (104) angeordnet sind, wobei die ersten Elektroden (110) durchsichtig sind;
eine Elektrobenetzungskammer (118), die über den ersten Elektroden (110) angeordnet ist, wobei in der Elektrobenetzungskammer (118) eine nicht polare Flüssigkeit (118B) angeordnet ist;
eine zweite Elektrode (120), die auf der Elektrobenetzungskammer (118) angeordnet ist, wobei die zweite Elektrode (120) durchsichtig ist;
eine untere leitfähige Schicht (124), an die eine Spannung angelegt werden kann und die über der zweiten Elektrode (120) angeordnet ist, wobei die untere leitfähige Schicht (124) durchsichtig ist;
eine photoleitende Schicht (126), die auf der unteren leitfähigen Schicht (124) angeordnet ist;
eine offene Zellkammer (128), die auf der photoleitenden Schicht (126) angeordnet ist und konfiguriert ist, eine Zelle aufzunehmen;
eine obere leitfähige Schicht (130), an die eine Spannung angelegt werden kann und die auf der offenen Zellkammer (128) angeordnet ist; und
eine Wellenleiterschicht (114), die zwischen den ersten Elektroden (110) und der Elektrobenetzungskammer (118) angeordnet ist, wobei eine obere Fläche der Wellenleiterschicht (114) zur Elektrobenetzungskammer (118) freiliegt und ein Brechungsindex der Wellenleiterschicht (114) größer als ein Brechungsindex der nicht polaren Flüssigkeit (118B) ist;
wobei die nicht polare Flüssigkeit (118B) konfiguriert ist, aufgrund eines elektrischen Feldes, das durch eine Spannung bewirkt wird, die an eine oder mehrere der ersten Elektroden (110) und an die zweite Elektrode (120) angelegt wird, verformt zu werden, derart, dass ein optischer Weg (195) in der nicht polaren Flüssigkeit (118B) und zwischen der Wellenleiterschicht (114) und der zweiten Elektrode (120) gebildet wird.

2. Biosensor nach Anspruch 1, wobei die photoleitende Schicht (126) amorphes Silizium umfasst.

3. Biosensor nach Anspruch 1 oder 2, wobei die Sensoreinheiten (100) jeweils ferner einen Stapel dielektrischer Schichten (112) umfassen, der zwischen den ersten Elektroden (110) und der Elektrobenetzungskammer (118) angeordnet ist, wobei der Stapel dielektrischer Schichten (112) einen Interferenzfilter umfasst, wobei sich der Stapel dielektrischer Schichten (112) mit den ersten Elektroden (110) in direktem Kontakt befindet.

4. Biosensor nach einem der vorhergehenden Ansprüche, wobei die Elektrobenetzungskammer (118) mehrere Elektrobenetzungszellen (118') umfasst, die durch Isolierstrukturen (118A) voneinander getrennt sind, und die nicht polare Flüssigkeit (118B) in jeder der Elektrobenetzungszellen (118') angeordnet ist, wobei die Elektrobenetzungszellen (118') über den ersten Elektroden (110) in einer Eins-zu-Eins-Entsprechung angeordnet sind.

5. Biosensor nach einem der vorhergehenden Ansprüche, wobei ferner eine polare Flüssigkeit (118C) in der Elektrobenetzungskammer (118) angeordnet ist und ein Brechungsindex der polaren Flüssigkeit (118C) niedriger als ein Brechungsindex der nicht polaren Flüssigkeit (118B) ist.

6. Biosensor nach einem der vorhergehenden Ansprüche, wobei die Elektrobenetzungskammer (118) eine Isolierstruktur (118A) zwischen den ersten Elektroden (110) und der zweiten Elektrode (120), die die nicht polare Flüssigkeit (118B) umgibt, umfasst.

7. Biosensor nach einem der vorhergehenden Ansprüche, wobei die obere leitfähige Schicht (130) durchsichtig ist.

8. Biosensor nach einem der vorhergehenden Ansprüche, der ferner einen mikrofluidtechnischen Kanal (154) umfasst, der mit der offenen Zellkammer (128) verbindet.

9. Biosensor nach einem der vorhergehenden Ansprüche, wobei die Sensoreinheiten (100) ferner einen Farbfilter (136) zwischen den Photodioden (104) und den ersten Elektroden (110) umfassen und der Farbfilter (136) über den Photodioden (104) in einer Eins-zu-Eins-Entsprechung angeordnet ist.

10. Zellenmanipulationsverfahren, das Folgendes umfasst:
Bereitstellen des Biosensors nach einem der vorhergehenden Ansprüche;
Einbringen von Zellen (170) in den Biosensor;
Anlegen einer Spannung an die untere leitfähige Schicht (124) und die obere leitfähige Schicht (130);
Anlegen einer Spannung an eine oder mehrere der ersten Elektroden (110) und an die zweite Elektrode (120), um ein erstes elektrisches Feld in der Elektrobenetzungskammer (118) zu bilden, wobei die nicht polare Flüssigkeit (118B) durch das erste elektrische Feld verformt wird und ein erster optischer Weg (195) in der nicht polaren Flüssigkeit (118B) gebildet wird;
Bilden eines ersten optischen Musters (190), das eine der Zellen (170) umgibt, unter Verwendung eines ersten Laserstrahls (180), der durch den ersten optischen Weg (195) verläuft; und
Belassen der Zelle (170), die von dem ersten optischen Muster (190) umgeben ist, in der offenen Zellkammer (128) und Entfernen der restlichen Zellen (170) aus dem Biosensor.

11. Zellenmanipulationsverfahren nach Anspruch 10, das ferner Folgendes umfasst:
Inkubieren der Zelle (170), die in der offenen Zellkammer (128) belassen wurde, um mehrere Zellen (170') zu erzeugen, die von der Zelle (170) abstammen;
Bilden eines zweiten optischen Musters (190'), das die Zellen (170') umgibt, die von der Zelle (170) abstammen, unter Verwendung des ersten Laserstrahls (180), und
Ernten der Zellen (170'), die von der Zelle (170) abstammen und von dem zweiten optischen Muster (190') umgeben sind, aus der offenen Zellkammer (128).

12. Zellenmanipulationsverfahren nach Anspruch 11, wobei das erste optische Muster (190) und das zweite optische Muster (190') eine erste Projektionsfläche bzw. eine zweite Projektionsfläche auf einer horizontalen Ebene aufweisen, auf der ein Boden der offenen Zellkammer (128) angeordnet ist, und die zweite Projektionsfläche größer als die erste Projektionsfläche ist.

13. Zellenmanipulationsverfahren nach einem der vorhergehenden Ansprüche 10-12, das ferner Folgendes umfasst:
Inkubieren der Zelle (170), die in der offenen Zellkammer (128) belassen wurde, um mehrere Zellen (170') zu erzeugen, die von der Zelle (170) abstammen;
Kennzeichnen der Zellen (170') mit einem fluoreszierenden Marker;
Anlegen einer Spannung an die ersten Elektroden (110) und die zweite Elektrode (120), um ein zweites elektrisches Feld zu bilden, dessen Bereich größer als derjenige des ersten elektrischen Feldes ist, wobei die nicht polare Flüssigkeit (118B) durch das zweite elektrische Feld verformt wird und ein dritter optischer Weg (195" in der nicht polaren Flüssigkeit (118B) gebildet wird;
Bestrahlen der Zellen (170'), die den fluoreszierenden Marker aufweisen, mit einem zweiten Laserstrahl (180'), der durch den dritten optischen Weg (195" verläuft, um den fluoreszierenden Marker zu erregen; und
Erhalten eines Fluoreszenzsignals, das durch den fluoreszierenden Marker emittiert wird, nachdem er erregt worden ist.

14. Zellenmanipulationsverfahren nach Anspruch 13, wobei der erste Laserstrahl (180) eine erste Wellenlänge aufweist und der zweite Laserstrahl (180') eine zweite Wellenlänge aufweist, die kürzer als die erste Wellenlänge ist.

## Revendications

1. Biocapteur comportant : une pluralité d'unités de capteur (100), dans lequel chacune des unités de capteur (100) comporte :
une pluralité de photodiodes (104) ;
une pluralité de premières électrodes (110) disposées au-dessus des photodiodes (104), dans lequel les premières électrodes (110) sont transparentes ;
une chambre d'électromouillage (118) disposée au-dessus des premières électrodes (110), dans lequel un liquide apolaire (118B) est disposé dans la chambre d'électromouillage (118) ;
une seconde électrode (120) disposée sur la chambre d'électromouillage (118), dans lequel la seconde électrode (120) est transparente ;
une couche conductrice inférieure (124) destinée à appliquer une tension à celle-ci et disposée au-dessus de la seconde électrode (120), dans lequel la couche conductrice inférieure (124) est transparente ;
une couche photoconductrice (126) disposée sur la couche conductrice inférieure (124) ;
une chambre de cellule ouverte (128) disposée sur la couche photoconductrice (126) et configurée pour recevoir une cellule ;
une couche conductrice supérieure (130) destinée à appliquer une tension à celle-ci et disposée sur la chambre de cellule ouverte (128) ; et
une couche de guide d'ondes (114) disposée entre les premières électrodes (110) et la chambre d'électromouillage (118), dans lequel une surface supérieure de la couche de guide d'ondes (114) est exposée dans la chambre d'électromouillage (118), et un indice de réfraction de la couche de guide d'ondes (114) est supérieur à un indice de réfraction du liquide apolaire (118B) ; et
dans lequel le liquide apolaire (118B) est configuré pour être déformé, en raison d'un champ électrique provoqué par une tension appliquée à un ou plusieurs éléments parmi les premières électrodes (110) et la seconde électrode (120), de telle sorte qu'un trajet optique (195) est formé dans le liquide apolaire (118B) et entre la couche de guide d'ondes (114) et la seconde électrode (120).

2. Biocapteur selon la revendication 1, dans lequel la couche photoconductrice (126) comporte du silicium amorphe.

3. Biocapteur selon la revendication 1 ou 2, dans lequel chacune des unités de capteur (100) comporte en outre une pile de couches diélectriques (112) disposées entre les premières électrodes (110) et la chambre d'électromouillage (118), dans lequel la pile de couches diélectriques (112) comporte un filtre interférentiel, dans lequel la pile de couches diélectriques (112) est en contact direct avec les premières électrodes (110).

4. Biocapteur selon l'une quelconque des revendications précédentes, dans lequel la chambre d'électromouillage (118) comporte une pluralité de cellules d'électromouillage (118') séparées les unes des autres par des structures d'isolation (118A), et le liquide apolaire (118B) est disposé dans chacune des cellules d'électromouillage (118'), dans lequel les cellules d'électromouillage (118') sont disposées au-dessus des premières électrodes (110) en correspondance un à un.

5. Biocapteur selon l'une quelconque des revendications précédentes, dans lequel un liquide polaire (118C) est en outre disposé dans la chambre d'électromouillage (118), et un indice de réfraction du liquide polaire (118C) est inférieur à un indice de réfraction du liquide apolaire (118B).

6. Biocapteur selon l'une quelconque des revendications précédentes, dans lequel la chambre d'électromouillage (118) comporte une structure d'isolation (118A) entre les premières électrodes (110) et la seconde électrode (120) et entourant le liquide apolaire (118B).

7. Biocapteur selon l'une quelconque des revendications précédentes, dans lequel la couche conductrice supérieure (130) est transparente.

8. Biocapteur selon l'une quelconque des revendications précédentes, comportant en outre un canal microfluidique (154) relié à la chambre de cellule ouverte (128).

9. Biocapteur selon l'une quelconque des revendications précédentes, dans lequel chacune des unités de capteur (100) comporte en outre un filtre à couleur (136) entre les photodiodes (104) et les premières électrodes (110), et le filtre à couleur (136) est disposé au-dessus des photodiodes (104) en correspondance un à un.

10. Procédé de manipulation de cellules, comportant les étapes consistant à :
fournir le biocapteur selon l'une quelconque des revendications précédentes ;
introduire des cellules (170) dans le biocapteur ;
appliquer une tension à la couche conductrice inférieure (124) et à la couche conductrice supérieure (130) ;
appliquer une tension à un ou plusieurs éléments parmi les premières électrodes (110) et la seconde électrode (120) pour former un premier champ électrique dans la chambre d'électromouillage (118), dans lequel le liquide apolaire (118B) est déformé par le premier champ électrique, et un premier trajet optique (195) est formé dans le liquide apolaire (118B) ;
former un premier motif optique (190) entourant l'une des cellules (170) en utilisant un premier faisceau laser (180) qui passe par le premier trajet optique (195) ; et
laisser la cellule (170) entourée par le premier motif optique (190) dans la chambre de cellule ouverte (128) et retirer les cellules restantes (170) du biocapteur.

11. Procédé de manipulation de cellules selon la revendication 10, comportant en outre de :
incuber la cellule (170) laissée dans la chambre de cellule ouverte (128) pour générer de multiples cellules (170') dérivées de la cellule (170) ;
former un second motif optique (190') entourant les cellules (170') dérivées de la cellule (170) en utilisant le premier faisceau laser (180) ; et
récolter les cellules (170') dérivées de la cellule (170) et entourées par le second motif optique (190') à partir de la chambre de cellule ouverte (128).

12. Procédé de manipulation de cellules selon la revendication 11, dans lequel le premier motif optique (190) et le second motif optique (190') ont respectivement une première surface projetée et une seconde surface projetée sur un plan horizontal sur lequel un fond de la chambre de cellule ouverte (128) est situé, et la seconde surface projetée est plus grande que la première surface projetée.

13. Procédé de manipulation de cellules selon l'une quelconque des revendications 10 à 12 précédentes, comportant en outre de :
incuber la cellule (170) laissée dans la chambre de cellule ouverte (128) pour générer de multiples cellules (170') dérivées de la cellule (170) ;
marquer les cellules (170') avec un marqueur fluorescent ;
appliquer une tension aux premières électrodes (110) et à la seconde électrode (120) pour former un second champ électrique dont la surface est supérieure au premier champ électrique, dans lequel le liquide apolaire (118B) est déformé par le second champ électrique, et un troisième trajet optique (195" est formé dans le liquide apolaire (118B) ;
soumettre les cellules (170') ayant le marqueur fluorescent à un second faisceau laser (180') qui passe par le troisième trajet optique (195" pour exciter le marqueur fluorescent ; et
obtenir un signal fluorescent émis par le marqueur fluorescent après avoir été excité.

14. Procédé de manipulation de cellules selon la revendication 13, dans lequel le premier faisceau laser (180) a une première longueur d'onde, et le second faisceau laser (180') a une seconde longueur d'onde qui est plus courte que la première longueur d'onde.
